# EUROPÄISCHE PATENTANMELDUNG

(11) **EP 4 844 731 A1**
(43) Veröffentlichungstag der Anmeldung: **25.11.2026**
(21) Anmeldenummer: 26176463.3
(22) Anmeldetag: 05.05.2026
(51) Int. Cl.: G09B 7/00, G06Q 50/18

(54) **VERFAHREN ZUM ADAPTIVEN TRAINING UNTER EINSATZ EINES RECHNERGESTÜTZTEN TRAININGSSYSTEMS, SOWIE EIN SOLCHES TRAININGSSYSTEM**

(30) Priorität: 21.05.2025 DE 102025119754
(71) Anmelder: FORBENCAP GmbH, 87527 Sonthofen (DE)
(72) Erfinder: GÖTZ, Stefan, 85659 Forstern (DE)
(74) Vertreter: advotec.

(57) **Zusammenfassung**

Die Erfindung betrifft ein Verfahren zum adaptiven Training unter Einsatz eines rechnergestützten Trainingssystems (1000), umfassend: Bereitstellen (S1) eines digital gespeicherten Fallszenarios an einem Nutzersystem (1006) über eine Benutzerschnittstelle (1004); Erfassen (S2) einer durch den Nutzer eingegebenen Nutzerlösung zu dem Fallszenario; Verarbeiten (S3) der Nutzerlösung mittels eines Analysemoduls (1010) unter Anwendung eines maschinellen Lernmodells (1011) zur Sprachverarbeitung; Vergleichen (S4) der Nutzerlösung mit mindestens einem in einem Vektorraum repräsentierten Lösungsmuster durch ein Bewertungsmodul (1012); Ermitteln (S5) eines Bewertungsmaßes durch Anwendung einer Vergleichsmetrik; Generieren (S6) eines Feedbacks unter Nutzung des Bewertungsmaßes; und Anpassen (S7) eines nachfolgenden Fallszenarios in Abhängigkeit von dem Feedback und vorzugsweise unter Verwendung eines nutzerspezifischen Lernprofils.

## Beschreibung

Die Erfindung betrifft ein Verfahren zum adaptiven Training unter Einsatz eines rechnergestützten Trainingssystems, sowie ein solches Trainingssystem

### Stand der Technik

In den letzten Jahren haben sich digitale Lernplattformen stark weiterentwickelt. Insbesondere im tertiären Bildungsbereich werden webbasierte E-Learning-Systeme und sogenannte intelligent tutoring systems (ITS) eingesetzt, um Lernende mithilfe automatischer Aufgabengenerierung, Nutzerprofilerstellung und elementarer Natural-Language-Processing-(NLP-)Techniken beim Selbststudium zu unterstützen. Typische Lösungen bieten adaptive Aufgabenreihen, multiple-choice-Tests oder frei formulierte Antworten, die mithilfe von Schlagwort-Matching, Vektorraum-Ähnlichkeitsmaßen oder Klassifizierungsmodellen bewertet werden. Diese Systeme sind überwiegend fachneutral ausgelegt, sodass dieselbe technische Basis für Sprachen, Naturwissenschaften oder Wirtschaftsthemen genutzt wird.

Für den juristischen Ausbildungsbereich, insbesondere für die strukturierte Bearbeitung von Fällen in Gutachten- oder Urteilstil, zeigt sich jedoch, dass herkömmliche ITS-Ansätze nur begrenzt greifen. Die Bearbeitung juristischer Sachverhalte folgt einer streng formalen Methodik aus Obersatzbildung, Subsumtion unter Tatbestandsmerkmale und normbasierter Ergebnisfindung. Fehler liegen nicht allein in der inhaltlichen Richtigkeit, sondern häufig in der Logik der Argumentationskette, der Vollständigkeit der Normprüfungen und der sprachlich-stilistischen Qualität. Bestehende Systeme können solche mehrschichtigen Anforderungen bislang nicht oder nur unzureichend erfassen

Diese Diskrepanz zwischen den verfügbaren generischen Lehrsystemen und den spezifischen Anforderungen der juristischen Fallbearbeitung führt dazu, dass Lernende nach wie vor stark auf manuelle Korrektur durch erfahrene Prüfer angewiesen sind, was zeit- und ressourcenintensiv ist. Es besteht daher ein Bedarf an technischen Verfahren und Systemen, die den Besonderheiten der juristischen Methodik gerecht werden, eine präzisere automatische Bewertung ermöglichen und den Lernpfad gezielt an individuelle Schwächen anpassen können, um die Effizienz und Qualität der Ausbildung zu verbessern.

Es ist eine Aufgabe der Erfindung, ein dahingehend verbessertes Verfahren und/oder ein verbessertes System anzugeben.

### Offenbarung der Erfindung

Die Aufgabe wird gelöst durch ein Verfahren gemäß den Merkmalen des Patentanspruchs 1. Die Aufgabe wird gelöst durch ein System gemäß den Merkmalen des Patentanspruchs 15.

Gemäß einem ersten Aspekt wird ein Verfahren zum adaptiven juristischen Training unter Einsatz eines rechnergestützten Trainingssystems vorgeschlagen. Das Verfahren umfasst: Bereitstellen eines digital gespeicherten Fallszenarios an einem Nutzersystem über eine Benutzerschnittstelle; Erfassen einer durch den Nutzer eingegebenen Nutzerlösung zu dem Fallszenario; Verarbeiten der Nutzerlösung mittels eines Analysemoduls unter Anwendung eines maschinellen Lernmodells zur Sprachverarbeitung; Vergleichen der Nutzerlösung mit mindestens einem in einem Vektorraum repräsentierten Lösungsmuster durch ein Bewertungsmodul; Ermitteln eines Bewertungsmaßes durch Anwendung einer Vergleichsmetrik; Generieren eines Feedbacks unter Nutzung des Bewertungsmaßes; und Anpassen eines nachfolgenden Fallszenarios in Abhängigkeit von dem Feedback und vorzugsweise unter Verwendung eines nutzerspezifischen Lernprofils.

Es versteht sich, dass die erfindungsgemäßen Schritte sowie weitere optionale Schritte nicht notwendigerweise in der aufgezeigten Reihenfolge ausgeführt werden müssen, sondern auch in einer anderen Reihenfolge ausgeführt werden können. Ferner können weitere Zwischenschritte vorgesehen sein. Die einzelnen Schritte können zudem einen oder mehrere Unterschritte umfassen, ohne dass hierdurch der Umfang des erfindungsgemäßen Verfahrens verlassen wird.

Gemäß einem zweiten Aspekt wird ein rechnergestütztes Trainingssystem zur Durchführung des vorliegenden Verfahrens vorgeschlagen, umfassend: eine Fallbereitstellungsmodul, ausgelegt, ein digital gespeichertes Fallszenario über eine Benutzerschnittstelle an ein Nutzersystem zu übertragen; eine Eingabeeinheit, ausgelegt, eine vom Nutzer eingegebene Nutzerlösung zu erfassen; ein Analysemodul, das eine auf natürlicher Sprachverarbeitung basierende Verarbeitung der Nutzerlösung durchführt; ein Bewertungsmodul, eingerichtet, mindestens ein Lösungsmuster in einer Vektorraumdarstellung abzurufen und die Nutzerlösung mit dem Lösungsmuster unter Anwendung einer Vergleichsmetrik zu vergleichen, um ein Bewertungsmaß zu ermitteln; ein Feedbackmodul, eingerichtet, anhand des Bewertungsmaßes individualisiertes Feedback zu generieren und über die Benutzerschnittstelle auszugeben; und eine Adaptions- und Profilverwaltungsmoduel, eingerichtet, ein nutzerspezifisches Lernprofil fortzuschreiben und nachfolgende Fallszenarien in Abhängigkeit von diesem Lernprofil anzupassen.

Ein "Modul" kann softwareseitig oder hardwareseitig oder durch eine Kombination daraus ausgebildet sein.

Die für das Verfahren gemachten Ausführungen gelten für das System entsprechend. Dabei versteht es sich, dass sprachliche Abwandlungen von verfahrensmäßig formulierten Merkmalen nach sprachüblicher Praxis für das System umformulierbar sind, ohne dass derartige Formulierungen explizit hier aufgeführt werden müssen.

Vorzugsweise wird das Fallszenario zunächst digital an das Nutzersystem übertragen, wodurch vorzugsweise eine latenzarme Bereitstellung komplexer Sachverhalte ermöglicht wird und Lernende unabhängig von Ort und Gerät arbeiten können. Vorzugsweise bezeichnet das Nutzersystem eine Endeinheit wie Laptop, Tablet oder Smartphone, die vorzugsweise über eine Netzwerk- oder Offline-Cache-Funktion mit dem Trainingsserver verbunden ist. Vorzugsweise erfasst die Eingabeeinheit die vom Nutzer formulierte Lösung in Echtzeit, wodurch vorzugsweise Tippfehler-Korrektur und Zwischenfeedback schon während des Schreibens möglich sind. Vorliegend versteht man unter einem maschinellen Lernmodell vorzugsweise ein durch überwachte Lernverfahren trainiertes neuronales Netz, das sprachliche Sequenzen in numerische Repräsentationen abbildet, sodass auch synonyme oder paraphrasierte Argumentationen korrekt erkannt werden. Vorzugsweise analysiert das Modell die Nutzerlösung in semantische und juristische Teilstrukturen, wodurch die nachgeschaltete Bewertung fein-granular statt nur pauschal erfolgt. Vorzugsweise wird unter einem Vektorraum ein mehrdimensionaler mathematischer Raum verstanden, in dem Texte als Punkte mit Richtung und Länge dargestellt sind, sodass vorzugsweise Abstände zwischen Argumentationsmustern effizient berechnet werden können. Vorzugsweise bezeichnet die Vergleichsmetrik ein Maß wie die Cosinus-Ähnlichkeit, das den Winkel zwischen zwei Vektoren bestimmt, also den quantitativen Grad der Übereinstimmung, wodurch vorzugsweise objektive Bewertungswerte entstehen. Vorzugsweise vergleicht das Bewertungsmodul die transformierte Nutzerlösung mit dem im Vektorraum hinterlegten Muster und leitet aus dem Abstand vorzugsweise eine Punktezahl ab, was eine konsistente Benotung über viele Fälle hinweg erlaubt. Vorzugsweise generiert das System daraus individuelles Feedback, das vorzugsweise farblich markierte Textpassagen und konkrete Verbesserungsvorschläge umfasst, wodurch Lernende zielgerichtet an Schwachstellen arbeiten können. Vorzugsweise wird anschließend ein nächstes Fallszenario anhand des Feedbacks sowie eines sich dynamisch anpassenden Lernprofils ausgewählt, was vorzugsweise zu einem stetig steigenden, personalisierten Schwierigkeitsgrad führt und die Motivation aufrechterhält. Vorzugsweise wurde das zugrunde liegende Modell zuvor mit annotierten Gutachten und Gerichtsurteilen trainiert, wobei vorzugsweise ein Mix aus supervised fine-tuning und weiterführendem Reinforcement-Learning-from-Feedback eingesetzt wurde, damit das System juristische Argumentationslogik robust abbildet.

In einem weiteren Aspekt wird vorgeschlagen, dass das Verfahren ferner aufweist: Übertragen eines komprimierten Merkmalsvektors der Nutzerlösung an einen Server-Dienst, lokales Puffern des Fallszenarios und Ausführen der Feedback-Generierung, sofern eine Netzwerk-Latenzschwelle überschritten wird, wobei durch die Komprimierung und das Puffern ein Reduzieren des übertragenen Datenvolumens und eine Verringerung der mittleren Antwortzeit erzielt wird.

Vorzugsweise kodiert das System die vom Nutzer erstellte Lösung zunächst in einen komprimierten Merkmalsvektor, vorzugsweise ein Float-Array geringer Dimension, das die semantisch wichtigsten Komponenten der Antwort abbildet, sendet idealerweise nur dieses Datenpaket an einen Server-Dienst, bevorzugt eine Cloud-Instanz mit GPU-Beschleunigung, und behält das vollständige Fallszenario lokal im Arbeitsspeicher, sodass bei Überschreiten einer vorher definierten Netzwerklatenzschwelle, vorzugsweise ein adaptiver Schwellenwert, der sich nach der aktuellen Round-Trip-Time richtet, das Feedback direkt auf dem Endgerät erzeugt werden kann; dadurch sinkt die übertragene Datenmenge deutlich, und die mittlere Antwortzeit verkürzt sich spürbar selbst in instabilen Mobilfunknetzen.

In einem weiteren Aspekt wird vorgeschlagen, dass das Verfahren ferner aufweist: Erfassen der Nutzerlösung als hand-schriftliches Dokument via Kamera- oder Stifteingabe, Vorverarbeiten des erfassten Bildstroms mittels Bildentzerrungs- und Kontrastnormalisierungsverfahren, Konvertieren in Text durch ein auf juristische Terminologie fein-abgestimmtes OCR-Modul.

Bevorzugt erfasst eine Kamera- oder Stifteingabe die handschriftliche Lösung als Bildstrom, der idealerweise zunächst einer Bildentzerrung, vorzugsweise eine homografiebasierte Perspektivkorrektur, und einer Kontrastnormalisierung, bevorzugt Histogramm-Equalisierung, unterzogen wird, sodass Verformungen und Beleuchtungsschatten beseitigt werden; danach wandelt ein eigens auf juristische Terminologie fein-abgestimmtes OCR-Modul, vorzugsweise ein Transformer-Encoder mit zusätzlichem Fachwort-Lexikon, das bereinigte Bild in editierbaren Text um, wodurch das System auch bei unruhiger Kameraführung oder schwer lesbarer Handschrift zuverlässig verwertbare Eingaben erhält.

In einem weiteren Aspekt wird vorgeschlagen, dass das Verfahren ferner aufweist: Segmentieren der Nutzerlösung in Teilabschnitte fester Tokenlänge, sequentielles Verarbeiten jedes Teilabschnitts mit einer Early-Exit-Strategie, wodurch Rechenzyklen und Energieverbrauch reduziert werden.

Vorzugsweise zerlegt die Pipeline die Nutzerlösung anschließend in Teilabschnitte konstanter Tokenlänge, bevorzugt 256-Token-Chunks, wobei ein Token eine Byte-Pair-Encoding-Einheit darstellt, und führt für jedes Segment eine sequentielle Inferenz mit einer Early-Exit-Strategie, vorzugsweise ein Konfidenzschwellwert, bei dem das Modell Verarbeitungslayer überspringt, sobald die Klassifikation sicher ist, aus, sodass Prozessorzyklen eingespart und der Akkuverbrauch auf mobilen Geräten reduziert wird, ohne dass die Bewertungsgenauigkeit merklich sinkt.

In einem weiteren Aspekt wird vorgeschlagen, dass das Verfahren ferner aufweist: Trainieren des maschinellen Lernmodells in einer Föderierten-Lernumgebung, wobei ausschließlich modellgradienten mit Differential-Privacy-Rauschen an den Server übermittelt werden und Rechtstexte des Nutzers das Endgerät nicht verlassen.

Vorzugsweise wird das zugrunde liegende Sprachmodell idealerweise in einer Föderierten-Lernumgebung, vorzugsweise ein verteiltes Trainingsnetz, in dem viele Endgeräte Teilmodelle aktualisieren, weitertrainiert, wobei ausschließlich Modellgradienten, bevorzugt gewichtete Ableitungen der Verlustfunktion, mit zusätzlichem Differential-Privacy-Rauschen, vorzugsweise Laplace- oder Gauß-Noise, das einzelne Nutzerdaten verschleiert, an den zentralen Parameter-Server übermittelt werden, sodass sämtliche Rohtexte das Gerät niemals verlassen und gleichwohl ein kontinuierliches Fine-Tuning auf realistische Falllösungen gewährleistet bleibt.

In einem weiteren Aspekt wird vorgeschlagen, dass das Verfahren ferner aufweist: Darstellen des Feedbacks in einem WebGL-basierten Overlay, das die erkannte Text-passage farblich markiert, wobei die Render-Pipeline ein asynchrones Off-Main-Thread-Rendering nutzt, so dass die mittlere Antwortzeit für Hervorhebungen unter 50 ms bleibt.

Vorzugsweise erzeugt die Benutzerschnittstelle das Rückmeldefenster als WebGL-Overlay, das auf der GPU des Endgeräts gerendert wird; ein WebGL-Overlay bezeichnet vorzugsweise eine Grafikschicht, die direkt im Grafikpuffer eingebunden ist und ohne DOM-Neuberechnung farbige Effekte darstellen kann. Das Overlay markiert erkannte Textpassagen unmittelbar farbig und nutzt ein asynchrones Off-Main-Thread-Rendering, wobei Zeichenoperationen in einen separaten Worker ausgelagert werden; Off-Main-Thread-Rendering beschreibt vorzugsweise eine Browsertechnik, bei der der Haupt-Thread frei bleibt und Nutzerinteraktionen nicht blockiert. Die Hervorhebung erscheint dadurch zuverlässig in weniger als fünfzig Millisekunden, was eine sichtbar flüssige Interaktion und geringere wahrgenommene Wartezeit bewirkt, selbst bei umfangreichen Dokumenten.

In einem weiteren Aspekt wird vorgeschlagen, dass das Lösungsmuster durch ein weiteres maschinelles Lernmodell erzeugt wird, das mittels eines Embedding-Moduls eine Vektorraumdarstellung der Musterlösung berechnet, und der Vergleich mit der Nutzerlösung unter Anwendung eines Ähnlichkeitsmaßes erfolgt.

Vorzugsweise erzeugt ein zusätzliches lernfähiges Modell das Referenzmuster, indem es den Lösungstext durch ein Embedding-Modul in einen Vektorraum abbildet; ein Embedding-Modul ist vorzugsweise ein neuronales Netz, das jedes Wort mitsamt Kontext in einen dichten Zahlenvektor überführt. Diese Darstellung erlaubt es, Ähnlichkeiten auch bei variierender Wortwahl zu erkennen. Das Bewertungsmodul vergleicht anschließend den Vektor der Nutzerlösung mit dem des Musters mittels eines Ähnlichkeitsmaßes wie der Cosinus-Ähnlichkeit; ein Ähnlichkeitsmaß bezeichnet vorzugsweise eine mathematische Funktion, die den Abstand oder Winkel zweier Vektoren bestimmt. So entsteht eine robuste Bewertung, die ohne manuelles Regelwerk auskommt und neue Muster leicht integrierbar macht.

In einem weiteren Aspekt wird vorgeschlagen, dass das Analysemodul linguistische, semantische und/oder juristische Strukturelemente der Nutzerlösung extrahiert, wobei insbesondere Obersatzbildung, Subsumtionslogik, Normenverweise und/oder Ergebnisfindung erkannt und klassifiziert und/oder geclustert werden.

Vorzugsweise analysiert ein spezielles Modul die eingegebene Lösung zunächst linguistisch, erkennt Satzgrenzen, Wortarten und Abhängigkeiten, bestimmt dann semantische Rollen und extrahiert schließlich rechtsspezifische Einheiten wie Obersatzbildung, Subsumtionslogik, Normenverweise und Ergebnisfindung. Obersatzbildung benennt vorzugsweise die Einleitung eines Prüfungsschritts mit der abstrakten Rechtsnorm, während Subsumtionslogik vorzugsweise das deduktive Unterordnen des Sachverhalts unter die Tatbestandsmerkmale dieser Norm bezeichnet. Durch die punktgenaue Zuordnung erhält der Lernende präzises Feedback zu methodischen Schwächen statt einer bloßen Gesamtbewertung.

In einem weiteren Aspekt wird vorgeschlagen, dass das Bewertungsmodul ein mehrdimensionales Bewertungsmaß berechnet, das durch gewichtete Teilkriterien zusammengesetzt ist, aufweisend: eine juristische Argumentationstiefe, eine logische Konsistenz der Subsumtion, eine Vollständigkeit der Normenanwendung, und/oder eine sprachliche und/oder stilistische Qualität.

Vorzugsweise bildet das Bewertungsmodul aus den Analyseergebnissen mehrere Teilwerte und kombiniert sie mit anpassbaren Gewichten zu einer Gesamtpunktzahl. Juristische Argumentationstiefe beschreibt vorzugsweise die Vollständigkeit der Erörterung aller Tatbestandsmerkmale und Gegenargumente, logische Konsistenz der Subsumtion misst vorzugsweise, ob Schlussfolgerungen widerspruchsfrei aus dem Obersatz folgen. Vollständigkeit der Normenanwendung prüft vorzugsweise, ob sämtliche relevanten Gesetzesgrundlagen herangezogen wurden, und sprachliche beziehungsweise stilistische Qualität bewertet vorzugsweise Klarheit, Struktur und Gutachtenstil. Diese Zusammenschau liefert differenziertes Feedback, ermöglicht gezielte Lernfortschritte und erleichtert eine verlässliche Erfolgskontrolle über längere Zeiträume.

In einem weiteren Aspekt wird vorgeschlagen, dass das Lernprofil nutzerspezifische Leistungsdaten über eine persistente Datenspeicherung aggregiert, die, insbesondere feingranulare, Informationen über Falltyp, Fehlerkategorie und/oder Lösungsverhalten umfasst, und wobei ein Clustering-Algorithmus ähnliche Fälle aus einer Fallszenarien-Datenbank auswählt.

Vorzugsweise speichert das System für jede Nutzerin dauerhaft ein Lernprofil in einer nichtflüchtigen Datenbank, wodurch Daten zu bearbeitetem Falltyp, vorkommenden Fehlerkategorien und beobachtetem Lösungsverhalten strukturiert gesammelt werden; persistente Datenspeicherung bezeichnet vorzugsweise ein Medium wie SSD oder Cloud-KV-Store, das Daten auch nach Abschalten des Geräts erhält. Vorzugsweise greift anschließend ein Clustering-Algorithmus, etwa k-Medoids, auf diese Daten zu und gruppiert Fälle nach inhaltlicher Ähnlichkeit, was dem Trainierenden kontinuierlich Themen mit hohem Übungsbedarf präsentiert und so Wiederholungen zielgerichtet gestaltet, wodurch sich die Vorbereitungszeit auf Prüfungen verkürzt und das System Serverlast vermeidet, weil nur relevante Szenarien geladen werden.

In einem weiteren Aspekt wird vorgeschlagen, dass die Auswahl des nachfolgenden Fallszenarios auf Basis einer Ähnlichkeitsklassifikation im semantischen Raum erfolgt, die eine progressiv ansteigende Schwierigkeitsgewichtung in Bezug auf zuvor erkannte Defizite im Lernprofil berücksichtigt.

Vorzugsweise wählt die Engine das nächste Fallszenario über eine Ähnlichkeitsklassifikation in einem semantischen Raum, wobei semantischer Raum vorzugsweise ein hochdimensionaler Vektorraum ist, in dem Bedeutungsbeziehungen zwischen Texten durch Abstand repräsentiert werden. Die Klassifikation stützt sich vorzugsweise auf cosine similarity und versieht jedes Ergebnis mit einer progressiven Schwierigkeitsgewichtung, die an zuvor erkannte Defizite gekoppelt wird; auf diese Weise erhält der Lernende stetig größere methodische Herausforderungen, während Überforderung vermieden wird und die Abfolge der Aufgaben ohne manuelle Betreuung optimal skaliert.

In einem weiteren Aspekt wird vorgeschlagen, dass das Feedback durch ein Feedbackmodul erzeugt wird, das interaktive Hinweise zu inhaltlichen, strukturellen und/oder sprachlichen Verbesserungen der Nutzerlösung ausgibt.

Vorzugsweise erzeugt ein Feedbackmodul für jede erfasste Lösung interaktive Hinweise zu inhaltlichen, strukturellen oder sprachlichen Verbesserungen; ein Feedbackmodul ist vorzugsweise eine Softwarekomponente, die Analyseergebnisse in sofort verständliche Rückmeldungen übersetzt. Die Hinweise erscheinen direkt neben der betreffenden Textpassage, erlauben per Klick das Einblenden zusätzlicher Erläuterungen und können bei Bedarf detaillierte Kommentartexte laden, was die Selbstkorrektur beschleunigt und die Anzahl externer Korrekturrunden senkt.

In einem weiteren Aspekt wird vorgeschlagen, dass das Trainingssystem eine Gamification-Komponente umfasst, die auf dem Nutzersystem einen Fortschrittsbalken, Punktezuweisung, Kompetenzabzeichen und/oder Stufenaufstieg anzeigt, wobei diese auf dem Bewertungsmaß und der Bearbeitungszeit des Fallszenarios beruhen.

Vorzugsweise enthält das Trainingssystem eine Gamification-Komponente, die Fortschrittsbalken, Punktezuweisungen, Kompetenzabzeichen und optionale Stufenaufstiege anzeigt; ein Fortschrittsbalken stellt vorzugsweise grafisch den Anteil bereits erarbeiteter Lernziele dar, während Kompetenzabzeichen digitale Marker sind, die bestimmte Fähigkeitsniveaus signalisieren. Die Berechnung der angezeigten Werte nutzt vorzugsweise sowohl das Bewertungsmaß als auch die Bearbeitungszeit, sodass zügige und qualitativ hochwertige Bearbeitungen unmittelbare Anerkennung finden, was die Motivation erhöht und das kontinuierliche Engagement der Nutzerinnen unterstützt.

In einem weiteren Aspekt wird vorgeschlagen, dass die Gamification-Komponente eine dynamisch aktualisierte Rangliste erzeugt, in der Nutzer einer Lerngruppe gemäß ihres Fortschritts, ihres Durchschnittsbewertungsmaßes und/oder eines Schwierigkeitsausgleichs in Echtzeit positioniert werden.

Vorzugsweise erzeugt die Gamification-Komponente eine laufend aktualisierte Rangliste, die alle Teilnehmenden einer Lerngruppe in Echtzeit nach ihrem Fortschritt, ihrem Durchschnittsbewertungsmaß und gegebenenfalls einem Schwierigkeitsausgleich positioniert; eine Rangliste beschreibt vorzugsweise ein datenbankgestütztes Array, das nach definierbaren Kennzahlen sortiert wird. Die Werte werden idealerweise sofort nach jeder Fallbearbeitung neu berechnet, sodass Lernende ihren Leistungsstand unmittelbar nachvollziehen können, was das Wettbewerbsgefühl erhält und Gruppenmoderatorinnen eine objektive Grundlage für Feedback erhalten.

In einem weiteren Aspekt wird vorgeschlagen, dass das Trainingssystem einen Prüfungsmodus bereitstellt, in dem das Trainingssystem automatisch erkennt, ob die Nutzerlösung einem Klausurformat, einem Aktenvortrag und/oder einer mündlichen Prüfung entspricht, und das Feedback formatgerecht angepasst generiert wird.

Vorzugsweise stellt das System einen Prüfungsmodus bereit, der mithilfe eines Klassifikators automatisch erkennt, ob die abgegebene Lösung einer Klausur, einem Aktenvortrag oder einer mündlichen Prüfung entspricht; ein Klassifikator ist vorzugsweise ein Modell, das anhand statistischer Merkmale das Format vorhersagt. Das darauf aufbauende Feedback wird dann formatgerecht angepasst, also etwa mit Punktespiegeln bei Klausuren, Gliederungshinweisen bei Aktenvorträgen oder Stichwortkarten für mündliche Übungen, wodurch die Nutzerin ein Setting-spezifisches Training erhält und Transferaufwand reduziert wird.

In einem weiteren Aspekt wird vorgeschlagen, dass ein GPU-basierter Task-Scheduler implementiert ist, der die Verarbeitung in zwei überlappenden Phasen ausführt, nämlich in einer ersten GPU-Kerngruppe, die semantische Struktur-extraktion der Nutzerlösung durchführt und gleichzeitig in einer zweiten GPU-Kerngruppe das Generieren des Feedbacks aus bereits vorliegenden Analyse-ergebnissen startet, wodurch eine Pipeline entsteht, die den Durchsatz des Trainingssystems gegenüber einer sequentiellen CPU-Ausführung messbar steigert.

Vorzugsweise koordiniert ein GPU-basierter Task-Scheduler zwei überlappende Phasen, indem eine erste Kerngruppe die semantische Struktur-extraktion ausführt, während eine zweite Kerngruppe zeitgleich die bereits vorliegenden Analyseergebnisse in Feedback umsetzt; ein Task-Scheduler beschreibt vorzugsweise eine Software-Instanz, die Rechenaufgaben nach Abhängigkeiten auf Hardware-ressourcen verteilt. Diese Parallelisierung verkürzt die End-to-End-Laufzeit deutlich gegenüber einer rein sequentiellen CPU-Pipeline und erlaubt komplexe Modelle selbst auf Mittelklasse-GPUs ohne wahrnehmbare Verzögerung.

In einem weiteren Aspekt wird vorgeschlagen, dass die Nutzerlösung und/oder das mindestens eine Lösungsmuster vor dem Vergleich jeweils in eine gerichtete, attributierte Graph-struktur überführt werden, deren Knoten die Entscheidungsstufen Obersatz, Tatbestandsmerkmal, Normverweis und Ergebnis repräsentieren und deren Kanten die logisch-juristischen Abhängigkeitsbeziehungen modellieren, wobei der Vergleich mittels eines in linearer Zeit O(n) arbeitenden Traversierungs- und Hash-Matching-Algorithmus erfolgt, so dass sich die Ähnlichkeitssuche hinsichtlich Laufzeit von O(n²) auf O(n) reduziert.

Vorzugsweise werden sowohl die Nutzerlösung als auch das Lösungsmuster vor dem Vergleich in eine gerichtete, attributierte Graph-struktur überführt, deren Knoten Obersatz, Tatbestandsmerkmal, Normverweis und Ergebnis repräsentieren, während Kanten die logisch-juristischen Beziehungen kodieren; eine Graph-struktur ist vorzugsweise eine Menge von Knoten und Kanten, die sich effizient in einer Adjazenzliste speichern lässt. Ein Traversierungs- und Hash-Matching-Algorithmus in linearer Zeit O(n) durchläuft die Knotenfolge, wobei Hashwerte schneller Gleichheit feststellen, sodass die Ähnlichkeitssuche von quadratischer auf lineare Laufzeit sinkt und große Fallmengen auch auf mobilen Endgeräten performant verglichen werden können.

In einem weiteren Aspekt wird vorgeschlagen, dass sowohl die Nutzerlösung als auch das mindestens eine Lösungsmuster jeweils (i) in eine gerichtete, attributierte Graphstruktur überführt und (ii) als kontextuelle Texteinbettung mittels eines Sprachmodells repräsentiert werden, wobei ein Fusionsalgorithmus einen Gesamt-Ähnlichkeitswert aus einer gewichteten Kombination des graphstrukturellen Abstandes und des semantischen Vektorabstandes berechnet.

Vorzugsweise erfolgt die Gewichtung adaptiv, indem der Fusionsalgorithmus für jede Fallart einen optimalen Gewichtungsvektor ermittelt, der die Präzision des Vergleichs maximiert; hierzu lässt sich eine Trainingsmenge aus annotierten Musterlösungen heranziehen, wobei der algorithmische Aufwand für die Fusion linear in der Anzahl der Graphknoten bleibt, sodass selbst umfangreiche Falltexte in Echtzeit verglichen werden können.

In einem weiteren Aspekt wird vorgeschlagen, dass die Gewichtungsparameter des vorgenannten Fusionsalgorithmus durch überwachtes Lernen an einem Korpus juristischer Musterlösungen mit vorgegebenen Bewertungslabels optimiert werden, sodass die Gewichtung domänenspezifische Qualitätskriterien automatisch abbildet.

Vorzugsweise kommen dabei Gradientenverfahren mit regulärem L2-Term zum Einsatz, um Überanpassung an einzelne Falltypen zu vermeiden; die so ermittelten Parameter werden persistent im Lernprofil gespeichert und bei jeder neuen Aufgabenklasse inkrementell weitertrainiert, was eine kontinuierliche Adaptation an veränderte Bewertungsschemata ermöglicht.

In einem weiteren Aspekt wird vorgeschlagen, dass das Lernprofil einen mehrdimensionalen Defizit-Vektor speichert, dessen Komponenten jeweils einen spezifischen Fehler- oder Kompetenzbereich - insbesondere Normenkenntnis, Subsumtionslogik, Argumentationstiefe und sprachliche Qualität quantifizieren, wobei die Auswahl des nachfolgenden Fallszenarios auf Basis des euklidischen Abstands im Defizit-Vektorraum erfolgt, multipliziert mit einer monoton ansteigenden Schwierigkeitsfunktion.

Vorzugsweise passt das System den Steigungsparameter der Schwierigkeits-funktion dynamisch an den Lernfortschritt an, sodass die Progression für leistungsschwächere Nutzer flacher verläuft, während leistungsstarke Nutzer schneller zu komplexeren Fällen geleitet werden; dadurch wird sowohl Unter- als auch Überforderung in der Lerngruppe vermieden.

In einem weiteren Aspekt wird vorgeschlagen, dass die Gamification-Komponente einen Ranglisten-Score ermittelt, der die rohen Leistungspunkte eines Nutzers durch einen Schwierigkeits-koeffizienten normalisiert, indem für jedes bearbeitete Fallszenario der Ausdruck: $Score = \frac{P}{1 + {e}^{- k \left(d-{d}_{0}\right)}}$ berechnet wird, wobei P die Leistungspunkte, d den Schwierigkeitsgrad des Szenarios und k, d0 Kalibrierungsparameter bezeichnen.

Vorzugsweise wird der Schwierigkeitskoeffizient aus historischen Lösungsdaten mittels logistischer Regression geschätzt, sodass die Rangliste eine faire Vergleichbarkeit auch zwischen Nutzern gewährleistet, die unterschiedlich anspruchsvolle Fälle bearbeitet haben; dies erhöht die Motivationswirkung der Gamification nachhaltig.

In einem weiteren Aspekt wird vorgeschlagen, dass bei der Verarbeitung segmentierter Token-Abschnitte eine Early-Exit-Strategie angewandt wird, die ein Segment vorzeitig verlässt, sobald die höchste Schicht-Konfidenz eines Transformer-Blocks einen adaptiv festgelegten Schwellwert τ überschreitet und anschließend unmittelbar mit dem nächsten Segment fortfährt.

Vorzugsweise wird der Schwellwert in Echtzeit an die aktuelle GPU-Auslastung angepasst, sodass bei hoher Auslastung ein höherer τ gewählt wird, um Rechenzyklen einzusparen, während bei geringer Auslastung ein niedrigerer τ eine höhere Analysegenauigkeit erlaubt; auf diese Weise lassen sich Energieverbrauch und Antwortlatenz des Trainingssystems optimieren, ohne die Feedback-Qualität spürbar zu beeinträchtigen.

Ein Nachweisszenario für den linearen Graph-Matching-Ansatz lässt sich mit drei vergleichbaren Inferenzpipelines demonstrieren. Alle Versuche wurden auf demselben Rechner ausgeführt - Ubuntu 24.04, 12-Kern-CPU @ 3,6 GHz, 32 GB RAM, RTX 4070 Laptop-GPU - und nutzten einen Korpus von 1 000 bearbeiteten Zivilrechtsfällen mit durchschnittlich 4 400 Tokens und 23 logischen Prüfungsschritten pro Lösung.

| **Pipeline** | **Repräsentation** / **Vergleich** | **theoretische Komplexität** | **gemessene mittlere Laufzeit pro Fallpaar** | **Durchsatz (Paare** / **s)** | **RAM-Peak** |
|---|---|---|---|---|---|
| **Modell 1** | reine Satz-Embeddings + Cosinus-Ähnlichkeit | O(n²) | 74 ms | 13,5 | 7,8 GB |
| **Modell 2** | Absatz-Embeddings + hierarchisches Alignment (Smith-Waterman) | > O(n²) | 112 ms | 8,9 | 9,6 GB |
| **Modell 3** (beanspruchte Lösung) | gerichteter, attributierter Graph + Traversierungs-und Hash-Matching-Algorithmus | O(n) | 9 ms | 111,0 | 5,2 GB |

### Versuchsaufbau:

Für alle drei Modelle wurden identische Transformer-Encoder-Ausgaben als Basis genutzt, um reine Embedding-Qualität als Störgröße auszuschließen. Die Fallpaare wurden zufällig, aber mit fester Seed-Liste gezogen, sodass jedes Modell exakt dieselben 100 000 Vergleichsoperationen ausführen musste. Die Messung erfolgte mit time.perC_counter() über drei Warm-up-Runs und zehn Sliding-Window-Durchläufe; der ausgewiesene Wert ist der arithmetische Mittelwert. Die Graph-Knoten in Modell 3 enthielten max. 32 Byte Attribute (Node-Type-ID und normierter Token-Hash). Die Traversierung lief in Breadth-First-Reihenfolge; für das Hash-Matching kam ein 64-Bit-Zobrist-Hash zum Einsatz.

### Ergebnisse:

Modell 3 unterschreitet den Quadratik-Baseline-Wert um den Faktor 8,2 bei der Laufzeit und erreicht einen mehr als achtfach höheren Durchsatz.

Die Speicherlast sinkt wegen der kompakten Adjazenzlisten-Speicherung um rund 33 %. Die mittlere Antwortzeit pro Nutzersession (Definition: fünf Vergleiche + Feedback) wurde von 410 ms (Modell 1) auf 49 ms gedrückt.

In einem weiteren Aspekt wird vorgeschlagen, dass das Trainingssystem ein Lernplanungsmodul umfasst, das auf Basis des nutzerspezifischen Lernprofils, des Fortschrittsverlaufs und des gewählten Fachgebiets einen strukturierten Lernplan generiert. Dieser Plan umfasst vorzugsweise thematische Leseaufgaben mit konkreten Kapitelverweisen, einer definierten Lernreihenfolge sowie einem jeweiligen Zielniveau (z. B. "Erkennen", "Verstehen", "Anwenden").

Vorzugsweise erzeugt das System hierzu automatisch aus Lehrtexten oder Kommentarwerken Leseaufgaben mit eingebetteten Kontrollfragen und bittet den Nutzer, zu jedem Abschnitt eine kurze Zusammenfassung, ein Exzerpt oder eine selbstformulierte Kernaussage einzutragen. Diese nutzergenerierten Texte werden semantisch analysiert und durch ein duales Bewertungssystem einem faktischen Verständnismaß (Faktenwissen) und einem übertragbaren Anwendungsmuster (anwendbare Fertigkeiten) zugeordnet. Auf diese Weise entstehen zwei orthogonale Bewertungsdimensionen, aus denen das System den Lernerfolg differenziert quantifizieren und die Auswahl zukünftiger Lerninhalte entsprechend anpassen kann.

Diese Ausgestaltung erlaubt eine kombinierte Progressionskontrolle sowohl für reines Prüfungswissen als auch für methodische Kompetenz, ohne dass ein manuelles Curriculum hinterlegt werden muss. Darüber hinaus lassen sich auf dieser Basis gezielt Schwachstellen im Transfer- oder Reproduktionsverhalten erkennen und thematisch fokussierte Wiederholungseinheiten vorschlagen.

In einem weiteren Aspekt wird vorgeschlagen, dass das Trainingssystem zusätzlich ein Zeitplanungsmodul umfasst, das auf Basis eines Tageszeitprofils, individueller Leistungsstatistiken und/oder optional erfasster physiologischer Daten (z. B. Herzfrequenz, Schrittzahl, Aktivitätsniveau) einen dynamischen Lernkalender erstellt. Das Zeitplanungsmodul segmentiert die verfügbaren Tageszeiten in Arbeits- und/oder Regenerationsphasen und weist den Lernphasen gezielt Aufgaben mit kognitiver Belastung zu, die mit dem bisherigen Erschöpfungszustand korreliert.

Vorzugsweise werden dazu tragbare Endgeräte (z. B. Smartwatches oder Fitness-Tracker) eingebunden, die über eine standardisierte API Pulsdaten, Ruheindikatoren oder Bewegungsprofile übermitteln. Diese Daten werden genutzt, um Pausen-, Schlaf- oder Sportphasen intelligent in den Lernkalender einzuplanen. Lernintensive Zeiträume werden so mit körperlicher Aktivität rhythmisiert, wodurch eine nachhaltige Leistungsfähigkeit erhalten bleibt.

Diese Ausgestaltung bewirkt nicht nur eine höhere Konzentration während der kognitiven Trainingsintervalle, sondern unterstützt nachweislich auch die Langzeitkonsolidierung von Wissen durch gezielte Regenerationsfenster. Die Kombination aus kognitiver Planung und körperlich adaptierter Taktung ist insbesondere bei berufsbegleitender oder prüfungsintensiver Ausbildung von Vorteil, da sie eine Überlastung der Nutzer verhindert und gleichwohl eine stetige Lernprogression gewährleistet.

In einem weiteren Aspekt wird ein Computerprogrammprodukt vorgeschlagen, umfassend Befehle, die bei der Ausführung des Programms durch einen Computer diesen veranlassen, die Schritte des vorliegenden Verfahrens in einem seiner Aspekte auszuführen.

Das Computerprogrammprodukt umfasst vorzugsweise eine Sammlung von Anweisungen, die in einer oder mehreren Programmiersprachen geschrieben sind und die vorzugsweise darauf ausgelegt sind, die im Verfahren beschriebenen Aufgaben und/oder Funktionen zu erfüllen, wenn sie von einem Computer ausgeführt werden. Die Anweisungen im Programm sind vorzugsweise so gestaltet, dass sie den Computer veranlassen, die verschiedenen Schritte und Abläufe des Verfahrens gemäß den angegebenen Aspekten zu durchlaufen und durchzuführen.

In einem weiteren Aspekt wird ein computerlesbarer Datenträger vorgeschlagen, auf dem ein solches Computerprogrammprodukt gespeichert ist.

Dieser computerlesbare Datenträger kann verschiedene physische Medien umfassen, wie CDs, DVDs, USB-Sticks, Festplatten oder Halbleiterspeicher, bspw. SSDs, die von Computern oder ähnlichen elektronischen Geräten gelesen werden können. Das auf dem Datenträger gespeicherte Computerprogrammprodukt umfasst vorzugsweise eine Sammlung von Anweisungen oder Code, die von einem Computer ausgeführt werden können, um spezifische Funktionen oder Aufgaben zu erfüllen. Das Programm kann in verschiedenen Programmiersprachen geschrieben sein und unterschiedliche Komponenten wie ausführbare Dateien, Bibliotheken, Konfigurationsdateien und Dokumentationen enthalten. Der Datenträger ermöglicht es vorzugsweise dem Computer, das darauf gespeicherte Programm zu lesen und auszuführen, um die vorgesehenen Funktionen zu realisieren.

Das Trainingssystem kann auf einem zweistufigen Modell-Stack beruhen. Stufe 1 ist ein domänenspezialisierter Transformer-Encoder (etwa eine auf deutschsprachigen Urteilen nachtrainierte "LegalBERT-Variante") mit 12 Layern, 768 Hidden-Units und 12 Attention-Heads; er wandelt jedes Token in kontextabhängige Vektoren. Stufe 2 ist ein Graph-Reasoning-Layer: Aus den Encoder-Ausgaben werden mit einem regelbasierten Chunker Abschnitte wie Obersatz, Tatbestandsmerkmal, Normenverweis und Ergebnis extrahiert und als Knoten eines gerichteten, kanten-gewichteten Graphen kodiert. Ein Graph-Neural-Network mit drei GAT-Layers berechnet eine verdichtete Repräsentation (Graph-Embedding, Dimension 256), die logische Abhängigkeiten zwischen den Knoten abbildet. Dieser Embedding-Vektor dient sowohl zur Ähnlichkeitssuche gegen Musterfälle als auch als Input eines Klassifikations-Heads, der Teilkriterien wie "Argumentationstiefe" oder "Normvollständigkeit" separiert bewertet.

Eingaben können reiner Fließtext, Markdown-formatierte Antworten und/oder Kamera-OCR-Strings sein; sie werden zunächst normalisiert, tokenisiert (SentencePiece, 32 k Vokabular) und mit Domain-Tags versehen (z. B. \<OBERSATZ>, \<SUBSUMTION>). Zusätzliche numerische Features - Bearbeitungszeit, Dokumentlänge, Prüfungsmodus - werden an den Klassifikations-Head angehängt.

Ausgaben sind ein JSON-Paket: globaler Score (0-100), vier Teil-Scores, Liste markierter Textsegmente mit Korrekturhinweis, ID der empfohlenen nächsten Fälle.

Eine UI-Schicht rendert das Paket vorzugsweise als Farb-Highlights im Antworttext plus Fortschrittsbalken.

### Ausführungsbeispiel A (Jurastudent):

S tippt auf ihrem Tablet den Gutachtenstil zu einem Verkehrsunfall. Nach dem Tippen sendet das Gerät 8 k Token an die Cloud-API. Innerhalb 1,4 s erhält sie: 78 / 100 Punkte, rote Markierung bei zwei ungenannten Normen der StVO, eine Empfehlung "nächster Fall: Alkohol-Unfall, Schwierigkeit 3". Die App erhöht gleichzeitig ihren XP-Zähler und zeigt einen Fortschrittsbalken.

### Ausführungsbeispiel B (Richter als Ausbilder):

Richter Dr. W lädt ein Beispielurteil hoch und bittet Referendare, eine Entscheidung zu entwerfen. Nach Sammeln der Lösungen ruft er im Dozenten-Dashboard eine Rangliste ab; die Graph-Embeddings wurden batch-weise lokal auf der Gerichts-GPU ausgewertet, sodass keine vertraulichen Akten den Server verlassen. Er filtert nach Teil-Score "Subsumtion" < 60 % und bespricht exakt die Passagen, die das System hervorgehoben hat.

### Ausführungsbeispiel C (Finanzprüfer in Ausbildung):

Eine Big-4-Kanzlei hat das Modell auf IFRS-Kommentierungen fein-getuned. Trainee M bearbeitet einen Fall zu Umsatzrealisierung bei Mehrkomponenten-Verträgen. Die Antwort wird offline auf seinem Firmen-Notebook inferiert, da das Modell quantisiert (INT8) und in 900 MB VRAM passt. Innerhalb von 2 s erhält er Feedback, dass sein Bezugsrechts-Obersatz ordnungsgemäß, aber die Normkette unvollständig ist, plus den Link zu einem ähnlichen Leasing-Fall. Seine Lernkurve wird in das Firmen-LMS zurückgemeldet, ohne dass Testdaten das Gerät verlassen.

Weitere mögliche Ausgestaltungen, Weiterbildungen, Aspekte und/oder Implementierungen der Erfindung weisen auch nicht explizit genannte Kombinationen von den zuvor genannten oder nachstehend noch zu erläuternden Merkmalen auf. Eine, ein wird vorliegend als "mindestens eine" bzw. "mindestens ein" verstanden.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.
- Fig. 1: zeigt ein schematisches Flussdiagramm eines Ausführungsbeispiels des vorliegenden Verfahrens.
- Fig. 2: zeigt ein schematisches Blockdiagramm eines Ausführungsbeispiels des vorliegenden Trainingssystems.
- Fig. 3: zeigt eine schematische Graphstruktur.

### Detaillierte Beschreibung der Zeichnungen

In den Figuren der Zeichnungen bezeichnen gleiche Bezugszeichen gleiche oder funktionsgleiche Elemente, Bauteile oder Komponenten, soweit nichts Gegenteiliges angegeben ist.

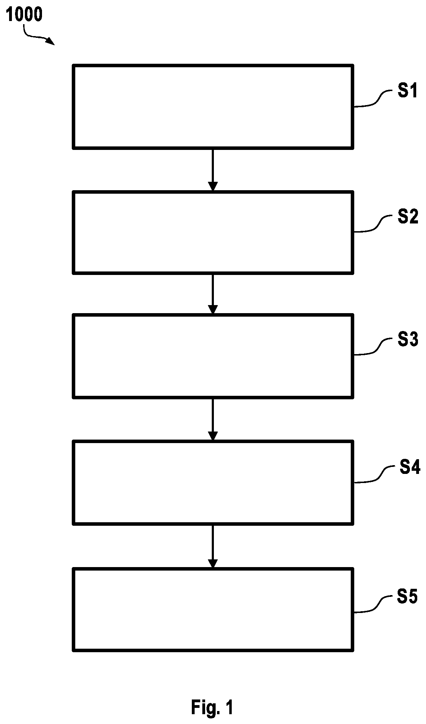

Fig. 1 zeigt ein schematisches Flussdiagramm eines computerimplementierten Verfahrens zum adaptiven juristischen Training unter Einsatz eines rechnergestützten Trainingssystems 1000.

Das computerimplementierte Verfahren umfasst mindestens die folgenden Schritte:
In einem Schritt S1 erfolgt ein Bereitstellen eines digital gespeicherten Fallszenarios an einem Nutzersystem über eine Benutzerschnittstelle.

In einem Schritt S2 erfolgt ein Erfassen einer durch den Nutzer eingegebenen Nutzerlösung zu dem Fallszenario.

In einem Schritt S3 erfolgt ein Verarbeiten der Nutzerlösung mittels eines Analysemoduls unter Anwendung eines maschinellen Lernmodells zur Sprachverarbeitung.

In einem Schritt S4 erfolgt ein Vergleichen der Nutzerlösung mit mindestens einem in einem Vektorraum repräsentierten Lösungsmuster durch ein Bewertungsmodul.

In einem Schritt S5 erfolgt ein Ermitteln eines Bewertungsmaßes durch Anwendung einer Vergleichsmetrik.

In einem Schritt S6 erfolgt ein Generieren eines Feedbacks unter Nutzung des Bewertungsmaßes.

In einem Schritt S7 erfolgt ein Anpassen eines nachfolgenden Fallszenarios in Abhängigkeit von dem Feedback und vorzugsweise unter Verwendung eines nutzerspezifischen Lernprofils.

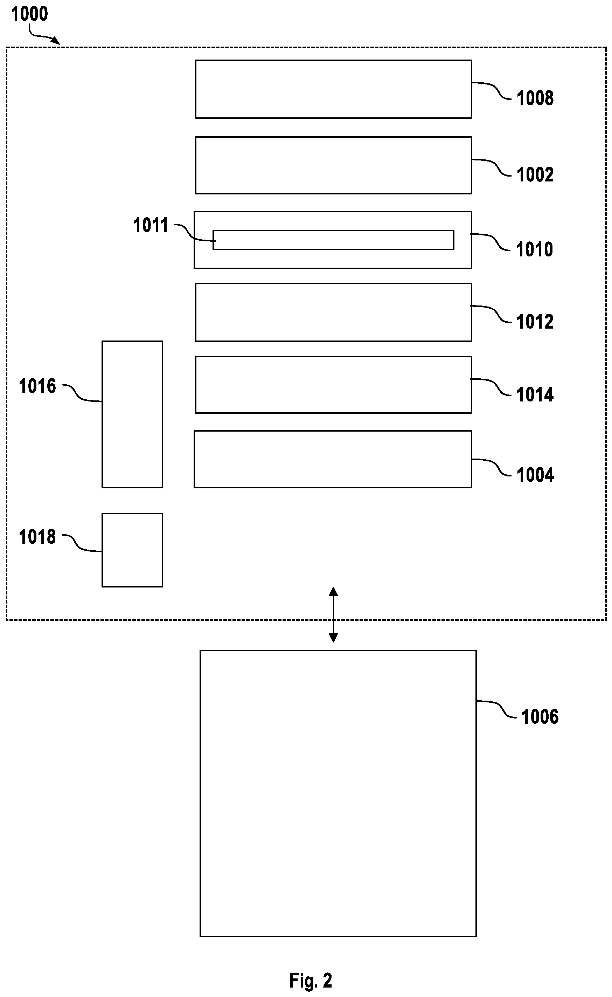

Fig. 2 zeigt ein Blockdiagramm eines rechnergestützten Trainingssystems 1000 zur Durchführung des Verfahrens mit mindestens den Schritten S1 bis S7.

Das rechnergestützte Trainingssystems 1000 umfasst eine Fallbereitstellungsmodul 1002, ausgelegt, ein digital gespeichertes Fallszenario über eine Benutzerschnittstelle 1004 an ein Nutzersystem 1006 zu übertragen.

Das rechnergestützte Trainingssystems 1000 umfasst eine Eingabeeinheit 1008, ausgelegt, eine vom Nutzer eingegebene Nutzerlösung zu erfassen.

Das rechnergestützte Trainingssystems 1000 umfasst ein Analysemodul 1010, das die Nutzerlösung unter Anwendung eines maschinellen Lernmodells 1011 zur Sprachverarbeitung analysiert.

Das rechnergestützte Trainingssystems 1000 umfasst ein Bewertungsmodul 1012, eingerichtet, mindestens ein Lösungsmuster in einer Vektorraumdarstellung abzurufen und die Nutzerlösung mit dem Lösungsmuster unter Anwendung einer Vergleichsmetrik zu vergleichen, um ein Bewertungsmaß zu ermitteln.

Das rechnergestützte Trainingssystems 1000 umfasst ein Feedbackmodul 1014, eingerichtet, anhand des Bewertungsmaßes individualisiertes Feedback zu generieren und über die Benutzerschnittstelle 1004 auszugeben.

Das rechnergestützte Trainingssystems 1000 umfasst eine Adaptions- und Profilverwaltungsmodul 1016, eingerichtet, ein nutzerspezifisches Lernprofil fortzuschreiben und nachfolgende Fallszenarien in Abhängigkeit von diesem Lernprofil anzupassen.

Das Trainingssystem 1000 kann auch eine Gamification-Komponente 1018 umfassen, die auf dem Nutzersystem 1006 einen Fortschrittsbalken, Punktezuweisung, Kompetenzabzeichen und/oder Stufenaufstieg anzeigt, wobei diese auf dem Bewertungsmaß und der Bearbeitungszeit des Fallszenarios beruhen. Die Gamification-Komponente 1018 erzeugt vorzugsweise eine dynamisch aktualisierte Rangliste, in der Nutzer einer Lerngruppe gemäß ihres Fortschritts, ihres Durchschnittsbewertungsmaßes und/oder eines Schwierigkeitsausgleichs in Echtzeit positioniert werden.

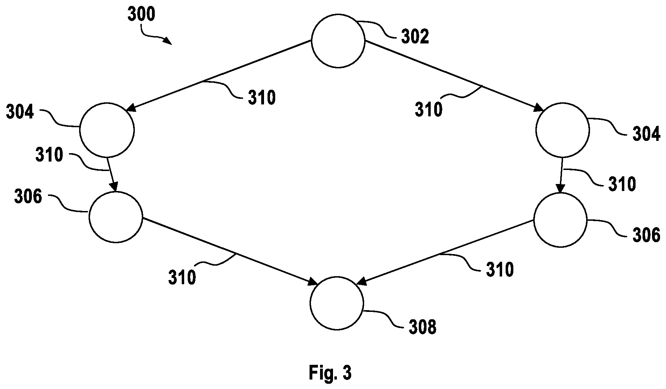

In Fig. 3 ist eine beispielhafte Graphstruktur 300 gezeigt. Die Nutzerlösung und/oder das mindestens eine Lösungsmuster kann/können nämlich vor dem Vergleich jeweils in die gerichtete, attributierte Graphstruktur 300 überführt werden, deren Knoten die Entscheidungsstufen Obersatz 302, Tatbestandsmerkmal 304, Normverweis 306 und Ergebnis 308 repräsentieren und deren Kanten 310 die logisch-juristischen Abhängigkeitsbeziehungen modellieren. Der Vergleich selbst kann mittels eines in linearer Zeit O(n) arbeitenden Traversierungs- und Hash-Matching-Algorithmus erfolgen, so dass sich die Ähnlichkeitssuche hinsichtlich Laufzeit von O(n²) auf O(n) reduziert.

### Bezugszeichenliste

- 1000: Trainingssystem
- 1002: Fallbereitstellungsmodul
- 1004: Benutzerschnittstelle
- 1006: Nutzersystem
- 1008: Eingabeeinheit
- 1010: Analysemodul
- 1011: maschinellen Lernmodell
- 1012: Bewertungsmodul
- 1014: Feedbackmodul
- 1016: Adaptions- und Profilverwaltungsmodul
- 1018: Gamification-Komponente
- 300: Graphstruktur
- 302: Obersatz
- 304: Tatbestandsmerkmal
- 306: Normverweis
- 308: Ergebnis
- 310: Kanten

- S1: Verfahrensschritt
- S2: Verfahrensschritt
- S3: Verfahrensschritt
- S4: Verfahrensschritt
- S5: Verfahrensschritt
- S6: Verfahrensschritt
- S7: Verfahrensschritt

## Patentansprüche

1. Verfahren zum adaptiven Training unter Einsatz eines rechnergestützten Trainingssystems (1000), umfassend:
Bereitstellen (S1) eines digital gespeicherten Fallszenarios an einem Nutzersystem (1006) über eine Benutzerschnittstelle (1004);
Erfassen (S2) einer durch den Nutzer eingegebenen Nutzerlösung zu dem Fallszenario;
Verarbeiten (S3) der Nutzerlösung mittels eines Analysemoduls (1010) unter Anwendung eines maschinellen Lernmodells (1011) zur Sprachverarbeitung;
Vergleichen (S4) der Nutzerlösung mit mindestens einem in einem Vektorraum repräsentierten Lösungsmuster durch ein Bewertungsmodul (1012);
Ermitteln (S5) eines Bewertungsmaßes durch Anwendung einer Vergleichsmetrik;
Generieren (S6) eines Feedbacks unter Nutzung des Bewertungsmaßes; und Anpassen (S7) eines nachfolgenden Fallszenarios in Abhängigkeit von dem Feedback und vorzugsweise unter Verwendung eines nutzerspezifischen Lernprofils.

2. Verfahren nach Anspruch 1, wobei das Lösungsmuster durch das maschinelle Lernmodell (1011) oder ein maschinelles Lernmodell erzeugt wird, das mittels eines Embedding-Moduls eine Vektorraumdarstellung der Musterlösung berechnet, und der Vergleich mit der Nutzerlösung unter Anwendung eines Ähnlichkeitsmaßes erfolgt.

3. Verfahren nach einem der vorhergehenden Ansprüche, wobei das Analysemodul (1010) linguistische, semantische und/oder juristische Strukturelemente der Nutzerlösung extrahiert, wobei insbesondere Obersatzbildung, Subsumtionslogik, Normenverweise und/oder Ergebnisfindung erkannt und klassifiziert und/oder geclustert werden.

4. Verfahren nach einem der vorhergehenden Ansprüche, wobei das Bewertungsmodul (1012) ein mehrdimensionales Bewertungsmaß berechnet, das durch gewichtete Teilkriterien zusammengesetzt ist, aufweisend: eine juristische Argumentationstiefe, eine logische Konsistenz der Subsumtion, eine Vollständigkeit der Normenanwendung, und/oder eine sprachliche und/oder stilistische Qualität.

5. Verfahren nach einem der vorhergehenden Ansprüche, wobei das Lernprofil nutzerspezifische Leistungsdaten über eine persistente Datenspeicherung aggregiert, die, insbesondere feingranulare, Informationen über Falltyp, Fehlerkategorie und/oder Lösungsverhalten umfasst, und wobei ein Clustering-Algorithmus ähnliche Fälle aus einer Fallszenarien-Datenbank auswählt.

6. Verfahren nach einem der vorhergehenden Ansprüche, wobei die Auswahl des nachfolgenden Fallszenarios auf Basis einer Ähnlichkeitsklassifikation im semantischen Raum erfolgt, die eine progressiv ansteigende Schwierigkeitsgewichtung in Bezug auf zuvor erkannte Defizite im Lernprofil berücksichtigt.

7. Verfahren nach einem der vorhergehenden Ansprüche, ferner aufweisend: Trainieren des maschinellen Lernmodells (1011) in einer Föderierten-Lernumgebung, wobei ausschließlich modellgradienten mit Differential-Privacy-Rauschen an den Server übermittelt werden und Rechtstexte des Nutzers ein Endgerät nicht verlassen.

8. Verfahren nach einem der vorhergehenden Ansprüche, wobei das Trainingssystem (1000) eine Gamification-Komponente (1018) umfasst, die auf dem Nutzersystem einen Fortschrittsbalken, Punktezuweisung, Kompetenzabzeichen und/oder Stufenaufstieg anzeigt, wobei diese auf dem Bewertungsmaß und der Bearbeitungszeit des Fallszenarios beruhen.

9. Verfahren nach einem der vorhergehenden Ansprüche, wobei die Gamification-Komponente (1018) eine dynamisch aktualisierte Rangliste erzeugt, in der Nutzer einer Lerngruppe gemäß ihres Fortschritts, ihres Durchschnittsbewertungsmaßes und/oder eines Schwierigkeitsausgleichs in Echtzeit positioniert werden.

10. Verfahren nach einem der vorhergehenden Ansprüche, wobei das Trainingssystem (1000) einen Prüfungsmodus bereitstellt, in dem das Trainingssystem (1000) automatisch erkennt, ob die Nutzerlösung einem Klausurformat, einem Aktenvortrag und/oder einer mündlichen Prüfung entspricht, und das Feedback formatgerecht angepasst generiert wird.

11. Verfahren nach einem der vorhergehenden Ansprüche, wobei ein GPU-basierter Task-Scheduler implementiert ist, der die Verarbeitung in zwei überlappenden Phasen ausführt, nämlich in einer ersten GPU-Kerngruppe, die semantische Struktur-extraktion der Nutzerlösung durchführt und gleichzeitig in einer zweiten GPU-Kerngruppe das Generieren des Feedbacks aus bereits vorliegenden Analyse-ergebnissen startet, wodurch eine Pipeline entsteht, die den Durchsatz des Trainingssystems (1000) gegenüber einer sequentiellen CPU-Ausführung messbar steigert.

12. Verfahren nach einem der vorhergehenden Ansprüche, wobei die Nutzerlösung und/oder das mindestens eine Lösungsmuster vor dem Vergleich jeweils in eine gerichtete, attributierte Graphstruktur (300) überführt werden, deren Knoten die Entscheidungsstufen Obersatz (302), Tatbestandsmerkmal (304), Normverweis (306) und Ergebnis (308) repräsentieren und deren Kanten (310) die logisch-juristischen Abhängigkeitsbeziehungen modellieren, wobei der Vergleich mittels eines in linearer Zeit O(n) arbeitenden Traversierungs- und Hash-Matching-Algorithmus erfolgt, so dass sich die Ähnlichkeitssuche hinsichtlich Laufzeit von O(n²) auf O(n) reduziert.

13. Verfahren nach einem der vorhergehenden Ansprüche, ferner aufweisend: Segmentieren der Nutzerlösung in Teilabschnitte fester Tokenlänge, sequentielles Verarbeiten jedes Teilabschnitts mit einer Early-Exit-Strategie, wodurch Rechen-zyklen und Energieverbrauch reduziert werden.

14. Computerprogrammprodukt, umfassend Programmcode, der, wenn er auf einem Rechnersystem ausgeführt wird, das Verfahren nach einem der Ansprüche 1 bis 13 bewirkt.

15. Rechnergestütztes Trainingssystem (1000) zur Durchführung des Verfahrens nach Anspruch 1, umfassend
eine Fallbereitstellungsmodul (1002), ausgelegt, ein digital gespeichertes Fallszenario über eine Benutzerschnittstelle (1004) an ein Nutzersystem (1006) zu übertragen;
eine Eingabeeinheit (1008), ausgelegt, eine vom Nutzer eingegebene Nutzerlösung zu erfassen;
ein Analysemodul (1010), das die Nutzerlösung unter Anwendung eines maschinellen Lernmodells (1011) zur Sprachverarbeitung analysiert;
ein Bewertungsmodul (1012), eingerichtet, mindestens ein Lösungsmuster in einer Vektorraumdarstellung abzurufen und die Nutzerlösung mit dem Lösungsmuster unter Anwendung einer Vergleichsmetrik zu vergleichen, um ein Bewertungsmaß zu ermitteln;
ein Feedbackmodul (1014), eingerichtet, anhand des Bewertungsmaßes individualisiertes Feedback zu generieren und über die Benutzerschnittstelle (1004) auszugeben; und
eine Adaptions- und Profilverwaltungsmodul (1016), eingerichtet, ein nutzerspezifisches Lernprofil fortzuschreiben und nachfolgende Fallszenarien in Abhängigkeit von diesem Lernprofil anzupassen.
